# EUROPÄISCHE PATENTSCHRIFT

(11) **EP 1 351 839 B1**
(45) Veröffentlichungstag und Bekanntmachung des Hinweises auf die Patenterteilung: **18.11.2009**
(21) Anmeldenummer: 02715964.9
(22) Anmeldetag: 17.01.2002
(51) Int. Cl.: B60N 2/64

(54) **SITZ, INSBESONDERE FÜR EIN FAHRZEUG**
SEAT, IN PARTICULAR FOR A VEHICLE
SIEGE, EN PARTICULIER POUR UN VEHICULE

(30) Priorität: 18.01.2001 AT 402001 U; 07.03.2001 AT 1642001 U
(43) Veröffentlichungstag der Anmeldung: 15.10.2003
(60) Teilanmeldung: 09011637.7
(73) Patentinhaber: Lanz, Eduard, 8010 Graz (AT)
(72) Erfinder: Lanz, Eduard, 8010 Graz (AT)
(74) Vertreter: Hübscher, Helmut
(86) Internationale Anmeldenummer: PCT/AT2002/000020
(87) Internationale Veröffentlichungsnummer: WO 2002/057110

(56) Entgegenhaltungen:
- DE-A- 2 039 121
- DE-A- 4 115 864
- DE-A- 19 817 489

## Beschreibung

### Technisches Gebiet

Die Erfindung bezieht sich auf einen Sitz, insbesondere für ein Fahrzeug, mit einer gepolsterten Sitzfläche und einer gepolsterten Rückenlehne.

### Stand der Technik

Sitze, die über längere Zeitspannen benützt werden, wie dies vor allem bei Fahrzeugsitzen der Fall ist, sollen den Körper eines Benützers im wesentlichen dynamisch entlasten, nicht aber ruhigstellen. Herkömmliche Sitze können dieser Anforderung nur bedingt genügen und zwingen dem Benützer Sitzhaltungen auf, die zu unterschiedlichen Beschwerden führen können.

Aus der DE 20 39 121 ist ein Sitz entsprechend dem Oberbegriff des Anspruchs 1 bekannt.

### Darstellung der Erfindung

Der Erfindung liegt somit die Aufgabe zugrunde, einen Sitz, insbesondere für ein Fahrzeug, der eingangs geschilderten Art so auszugestalten, daß eine beschwerdefreie Sitzbenützung auch über längere Zeitspannen gewährleistet werden kann.

Die Erfindung löst die gestellte Aufgabe dadurch, daß die Rückenlehne eine auf einen mittleren Bereich zu beiden Seiten der Wirbelsäule eines Benützers beschränkte Brustkorbabstützung bildet, an die sich gegenüber dem Brustkorb zurückversetzte und/oder federnd nachgiebige Polsterungsabschnitte seitlich anschließen.

Der Erfindung liegt die Erkenntnis zugrunde, daß durch die an die Rundung des Brustkorbes im Rückenbereich angepaßte konkave Ausgestaltung der Rükkenlehne herkömmlicher Sitze die Brustatmung eingeschränkt wird, weil das weitgehende Anliegen des Rückens an der konkaven Rückenlehne das für die Brustatmung wesentliche Heben und Senken der Rippen behindert. Daraus ergibt sich eine vermehrte Bauchatmung, was einerseits zu einem Vorwölben des Bauches und anderseits zu einer Druckbelastung der großen, dünnwandigen Venen im Bekkenbereich führt. Wird daher die wesentliche Brustkorbabstützung auf einen mittleren Bereich zu beiden Seiten der Wirbelsäule eines Benützers beschränkt, so wird die Brustatmung mit der Folge erleichtert, daß der venöse Rückstrom des Blutes von den Beinen zum Herzen unterstützt wird, zumal beim Heben der Rippen nicht nur Luft eingesaugt, sondern auch die Förderung des venösen Blutes von den Beinen zum Herzen unterstützt wird. Dazu kommt, daß durch die gegenüber einem anliegenden Brustkorb zurückversetzten und/oder federnd nachgiebigen Polsterungsabschnitte, die sich seitlich an die mittlere Brustkorbabstützung anschließen, die Schulterblätter nicht nach vorne oben gedrückt, sondern vielmehr entlastet werde. Dies ermöglicht eine weitgehend freie Drehung der Schulterblätter und hilft in einfacher Weise Verspannungen der Nackenmuskulatur zu vermeiden. Um trotz der angestrebten Freistellung des Brustkorbes außerhalb der mittleren Brustkorbabstützung eine gute Seitenführung für den Oberkörper zu gewährleisten, können in üblicher Weise Rückenlehnen mit seitlichen Randwülsten eingesetzt werden.

Eine auf einen mittleren Bereich der Rückenlehne beschränkte Brustkorbabstützung wird erfindungsgemäß mit einem geringen Konstruktionsaufwand dadurch erreicht, daß die Rückenlehne im Anlagebereich des Brustkorbes einen Querschnitt mit einer im wesentlichen geraden oder gegen den Wirbelsäulenbereich vorgewölbten vorderen Begrenzung aufweisen, wodurch sich mit zunehmendem Seitenabstand von dieser Brustkorbabstützung eine zunehmende Freistellung des Brustkorbes ergibt.

Damit die Bauchatmung zugunsten einer Brustatmung weiter zurückgedrängt werden kann, kann die Rückenlehne im Bereich sowohl der Brustkorbabstützung als auch der Lendenwirbelsäule der Höhe nach in je für sich federnd nachgiebige Polsterungsabschnitte unterteilt werden. Diese Polsterungsabschnitte erlauben der Höhe nach örtlich begrenzte Einfederungen der Polsterung, was im Brustkorbbereich zum Abbau größerer Druckbelastungen des Rükkens und damit zu einer Behinderung der Brustatmung führt. Im Bereich der Lendenwirbelsäule ermöglichen die je für sich federnd nachgiebigen Polsterungsabschnitte eine kyphotische Bewegung der Lendenwirbelsäule, so daß vorteilhafte Bewegungen beispielsweise für die Vermeidung von Thrombosen unterstützt werden.

Zur Anpassung des Sitzes an mögliche Beckenbewegungen ist auch die Sitzfläche entsprechend zu gestalten. Dies gelingt in einfacher Weise dadurch, daß die Sitzfläche in einem an die Rückenlehne anschließenden hinteren und einem eine Beinauflage bildenden vorderen Bereich eine in Richtung der Sitztiefe unterteilte Polsterung mit je für sich federnd nachgiebigen Polsterungsabschnitten aufweist. Die hinteren Polsterungsabschnitte wirken dabei mit den Polsterungsabschnitten der Rückenlehne im Bereich der Lendenwirbelsäule zusammen, so daß sich der Sitz auch im Übergangsbereich von der Sitzfläche zur Rückenlehne an die jeweilige Sitzhaltung angleicht. Die weitgehend voneinander unabhängig einfedernden Polsterungsabschnitte im Bereich der Beinauflage lassen eine entsprechende Berücksichtigung der sich ändernden Oberschenkellage zu, ohne örtliche Druckstellen im Auflagebereich befürchten zu müssen. Da die Beine unterschiedlich bewegt werden, empfiehlt sich eine Teilung der Polsterungsabschnitte in Richtung der Sitztiefe, so daß sich eine voneinander weitgehend unabhängige Abstützung der Oberschenkel ergibt. In ähnlicher Weise können auch die übrigen, je für sich nachgiebig federnden Polsterungsabschnitte im Bereich der Sitzfläche und der Rückenlehne zusätzlich geteilt werden.

Ist der hintere Bereich der Sitzfläche gegenüber dem vorderen eine Beinauflage bildenden Bereich abschwenkbar gelagert, so kann die Fähigkeit des Körpers, axiale Stöße auf die Wirbelsäule in der Kyphose federnd aufzunehmen, vorteilhaft genützt werden, weil bei solchen Stößen der hintere Bereich der Sitzfläche abschwenkt und damit eine kyphotische Wirbelsäuleneinstellung bedingt. Besonders günstige Verhältnisse ergeben sich in diesem Zusammenhang, wenn der hintere Bereich der Sitzfläche gegen Dämpferelemente abschwenkbar ist. Eine ähnliche Wirkung kann mit wesentlich einfacheren Mitteln dadurch erreicht werden, daß die Polsterung des hinteren Bereiches der Sitzfläche weicher als die des vorderen Bereiches ist.

Die Eigenschaft des Körpers, die Belastungen der Wirbelsäule in der Kyphose besser als in der Lordose aufnehmen zu können, kann durch eine weitere Konstruktionsmaßnahme genützt werden, bei der die Rückenlehne eine die Kyphose der Lendenwirbelsäule des Benutzers zumindest ab einer vorgegebenen Belastungsschwelle begünstigende Form aufweist, so daß bei einem Anpressen des Körpers gegen die Rückenlehne die Lendenwirbelsäule in die Kyphose gezwungen wird.

Die je für sich federnd nachgiebigen Polsterungsabschnitte können auf unterschiedlichen konstruktiven Wegen sichergestellt werden, beispielsweise über Federlatten oder Federteller. Besonders einfache Konstruktionsverhältnisse ergeben sich allerdings, wenn die aus einer Schaumstoffauflage bestehende Polsterung durch quer zur Rückenlehne bzw. quer zur Sitztiefe verlaufende Einschnitte der Schaumstoffauflage in je für sich federnd nachgiebige Polsterungsabschnitte unterteilt wird. Aufgrund der voneinander durch die Einschnitte getrennten Polsterungsabschnitte können diese Polsterungsabschnitte unabhängig vom benachbarten Polsterungsabschnitt zusammengedrückt werden, was die angestrebte, örtlich beschränkte Einfederung der Polsterungsabschnitte in Abhängigkeit von der Belastung der Rückenlehne bzw. der Sitzfläche erlaubt.

Durch einen entsprechend geneigten Verlauf dieser Einschnitte kann zusätzlich eine bestimmte Bewegung unterstützt werden. Verlaufen beispielsweise die Einschnitte in der Schaumstoffauflage für die Rückenlehne im Anliegebereich des Brustkorbes vom Einschnittgrund schräg nach oben und im Bereich der Lendenwirbelsäule vom Einschnittgrund schräg nach unten, so wird im Bereich der zwischen den Einschnitten gebildeten Polsterungsabschnitte eine Bewegung in Längsrichtung der Rückenlehne erleichtert, was sich vorteilhaft auf die Brustatmung auswirkt. In ähnlicher Weise empfiehlt es sich, die Einschnitte in der Schaumstoffauflage für die Sitzfläche im Bereich der Rückenlehne vom Einschnittgrund schräg nach hinten und im Bereich der Beinauflage schräg nach vorne verlaufen zu lassen, damit sich eine bevorzugte Bewegung in Richtung der Sitztiefe ergibt.

Bleiben im Bereich der Einschnitte zwischen den einzelnen Polsterungsabschnitten Stoßfugen frei, so wird die voneinander unabhängige Einfederung benachbarter Polsterungsabschnitte unterstützt, weil beim Einfedern der einzelnen Polsterungsabschnitte die Reibung zwischen den aneinandergrenzenden Polsterungsabschnitten herabgesetzt wird.

Ist die Brustkorbabstützung der Rückenlehne nicht fester Bestandteil der Polsterung, sondern besteht sie aus einem wahlweise an der Rückenlehne befestigbaren Zusatzpolster, so wird eine weitgehende Anpassung beispielsweise an die jeweiligen anatomischen Verhältnisse eines Benützers möglich.

### Kurze Beschreibung der Zeichnung

In der Zeichnung ist der Erfindungsgegenstand beispielsweise dargestellt.
Es zeigen
- Fig. 1: einen erfindungsgemäßen Sitz in einem schematischen Längsschnitt,
- Fig. 2: diesen Sitz in einer teilweise aufgerissenen Vorderansicht,
- Fig. 3: einen Schnitt nach der Linie III-III der Fig. 2,

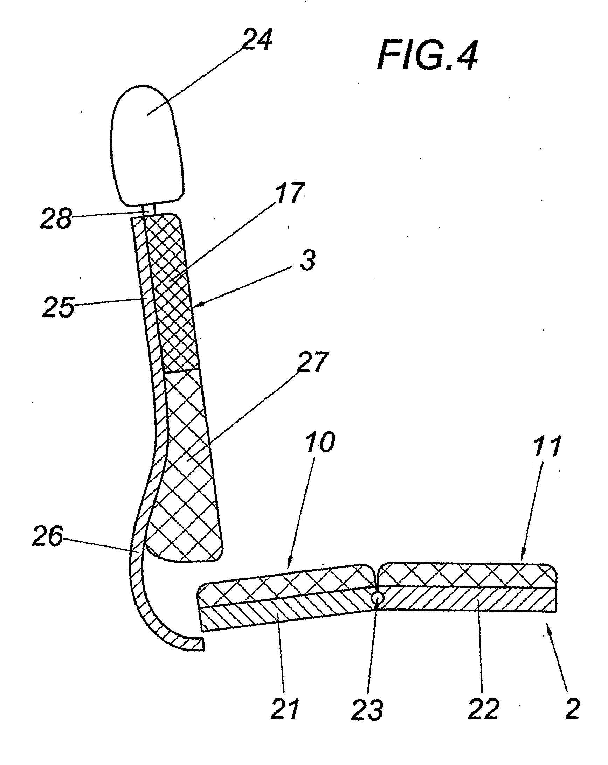

- Fig.4: eine Konstruktionsvariante eines erfindungsgemäßen Sitzes in einem schematischen Längsschnitt und die
- Fig. 5: bis 8 jeweils unterschiedlich aufgebaute Sitzflächen schematisch im Längsschnitt.

### Weg zur Ausführung der Erfindung

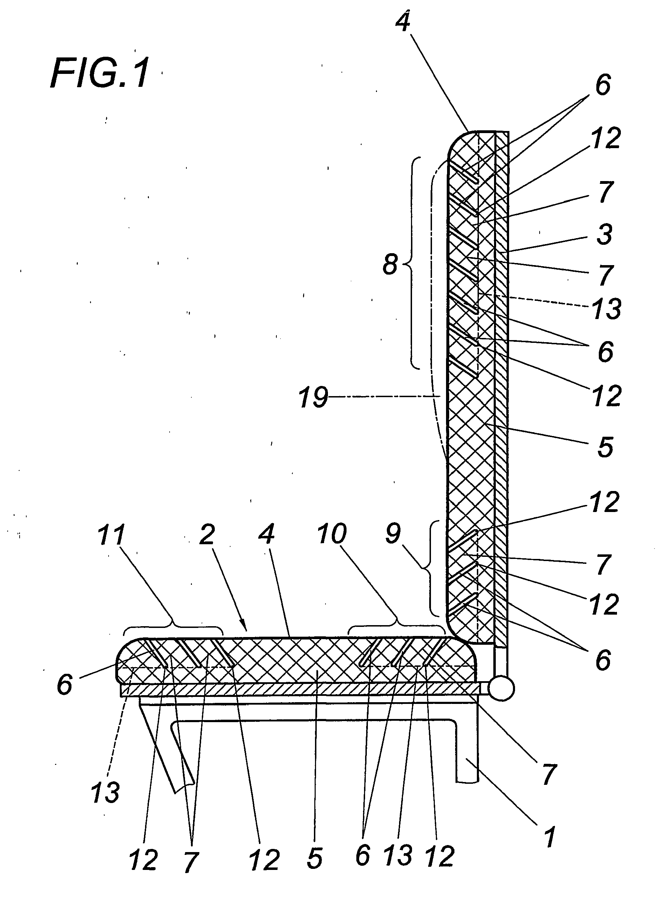

Der schematisch dargestellte Sitz gemäß dem Ausführungsbeispiel nach den Fig. 1 bis 3 kann beispielsweise als Flugzeugsitz eingesetzt werden. Er weist ein Gestell 1 mit einer Sitzfläche 2 und einer Rückenlehne 3 auf, die gegebenenfalls gegenüber der Sitzfläche 2 in ihrer Neigung verstellt werden kann. Die Polsterung sowohl der Sitzfläche 2 als auch der Rückenlehne 3 besteht im wesentlichen aus einer mit einem Überzug 4 versehenen Schaumstoffauflage 5, die durch Einschnitte 6 vorzugsweise mit einer die halbe Dicke der Schaumstoffauflage 5 übersteigenden Tiefe in je für sich federnd nachgiebige Polsterungsabschnitte 7 unterteilt ist. Wie insbesondere der Fig. 1 entnommen werden kann, wird die Rückenlehne 3 durch die Polsterungsabschnitte 7 im Anliegebereich 8 des Brustkorbes und im bereich 9 der Lendenwirbelsäule der Höhe nach unterteilt, während sich im Bereich der Sitzfläche, 2 eine Unterteilung in Richtung der Sitztiefe ergibt, und zwar in einem hinteren an die ,Rückenlehne 3 anschließenden Bereich 10 und in einem vorderen Bereich 11 für die Beinauflage. Durch die Einschnitte 6, die im Brustkorbbereich 8 vom Einschnittgrund 12 schräg nach oben und im Bereich 9 der Lendenwirbelsäule vom Einschnittgrund 12 schräg nach unten verlaufen, wird eine vorteilhafte Anpassung der Polsterung an die jeweilige Sitzhaltung erreicht, weil die sich zwischen den Einschnitten 6 bildenden Polsterungsabschnitte 7 eine örtlich begrenzte Einfederung mit der Wirkung erlauben, daß im Anliegebereich 8 des Brustkorbes das Heben und Senken der Rippen für die Brustatmung erleichtert wird. Im Bereich 9 der Lendenwirbel wird durch diese unterschiedliche örtliche Belastungen berücksichtigende Unterteilung der Polsterung eine kyphotische Bewegung der Lendenwirbelsäule ermöglicht, die durch die Polsterungsabschnitte 7 im hinteren Bereich 10 der Sitzfläche 2 unterstützt wird. In diesem Bereich 10 sind ja die Einschnitte 6 vom Einschnittgrund schräg nach hinten geneigt.

Eine gute, verschiedene Stellungen der Oberschenkel berücksichtigende Beinabstützung wird durch die Polsterungsabschnitte 7 im vorderen Bereich 11 der Sitzfläche 2 sichergestellt, wobei die Einschnitte vom Nutengrund 12 schräg nach vorne verlaufen, was wie bei den anderen schräg verlaufenden Einschnitten 6 eine bevorzugte Bewegung in Neigungsrichtung der Einschnitte mit sich bringt, weil ja diese Polsterungsabschnitte 7 bei einer entsprechenden Belastung eine Bewegungskomponente in Neigungsrichtung mit sich bringen. Um im Einschnittbereich eine gegenseitige Bewegung aneinanderstoßender Polsterungsabschnitte 7 zu erleichtern, können im Bereich der Einschnitte 6 Stoßfugen zwischen den Polsterungsabschnitten 7 frei bleiben. Durch zusätzliche Einschnitte 13 in Längsrichtung der Rückenlehne 3 bzw. in Richtung der Sitztiefe können die Polsterungsabschnitte 6 zusätzlich unterteilt werden, um unterschiedliche seitliche Belastungen des Sitzes in den einzelnen Bereichen berücksichtigen zu können. Dies ist insbesondere im Bereich 11 für die Beinauflage empfehlenswert.

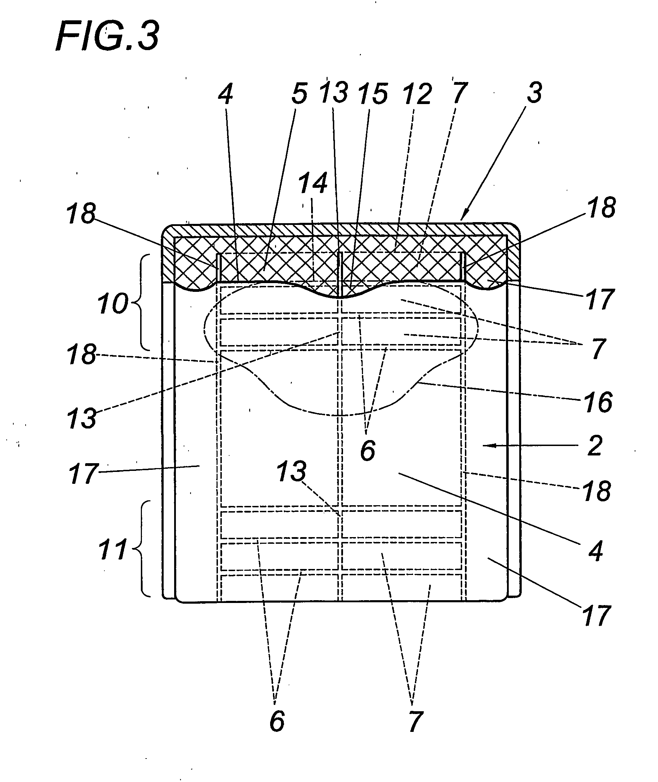

Die Unterteilung der Rückenlehne 3 in je für sich federnd nachgiebige Polsterungsabschnitte 7 der Höhe nach ist zur Unterstützung einer ausreichenden Brustatmung vorteilhaft, aber nicht hinreichend. Zu diesem Zweck muß auch die Querschnittsform bzw. der Aufbau der Rückenlehne an den Brustkorb angepaßt werden. Diese Anpassung erfolgt gemäß der Fig. 3 dadurch, daß der Querschnitt der Rückenlehne 3 eine im wesentlichen gerade, strichpunktiert angedeutete Begrenzung 14 oder einen in vollen Linien gezeichneten, gegen den Wirbelsäulenbereich vorgewölbten Abschnitt 15 aufweist. Aus der strichpunktiert angedeuteten Umfangsform 16 des Brustkorbes eines Sitzbenützers erkennt man, daß durch eine solche Querschnittsform der Rückenlehne 3 die Heb- und Senkbewegungen der Rippen wesentlich weniger behindert werden als durch herkömmliche Querschnittsformen mit einer konkaven Begrenzung gegenüber dem Brustkorb. Die Rückenlehne bildet somit eine beschränkte Brustkorbabstützung 17 im Bereich der Wirbelsäule und nicht im Rippenbereich. Die seitlich an die Brustkorbabstützung 17 anschließenden Polsterungsabschnitte sind ja gegenüber dem Brustkorb zurückversetzt, so daß der Brustkorb 16 mit zunehmendem Abstand von der Wirbelsäule im Rippenbereich zunehmend freigestellt wird. Dazu kommt, daß durch diese Freistellung des Brustkorbes auch die Schulterblätter entlastet werden, was sich vorteilhaft auf ein entspanntes, ungezwungenes Sitzverhalten auswirkt.

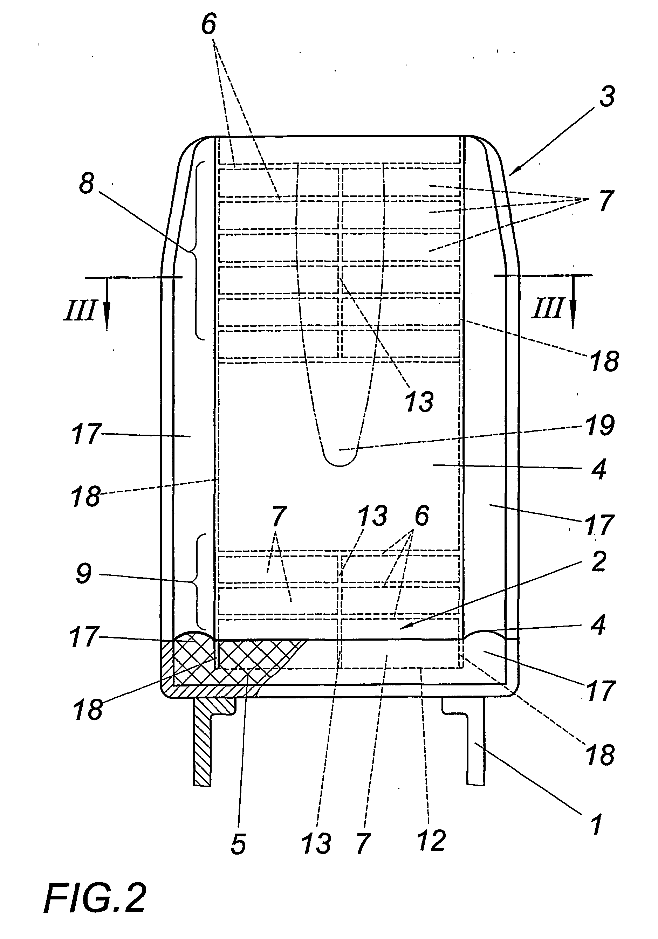

Der vorgewölbte Abschnitt 15 kann für eine gute Seitenabstützung des Oberkörpers sorgen, weil dieser Abschnitt 15 in die im Wirbelsäulenbereich vorhandene Vertiefung des Rückens eingreift, so daß unter Umständen auf zusätzliche Seitenabstützungen verzichtet werden kann. Solche Seitenabstützungen, die bei einer geraden Begrenzung 14 des Rückenlehnenquerschnittes wohl immer vorhanden sein werden, können sowohl im Bereich der Rückenlehne als auch der Sitzfläche aus Randwülsten 18 bestehen, wie sie in den Fig. 2 und 3 angedeutet sind. Diese Randwülste 18 können von der übrigen Polsterung durch randparallele Einschnitte 19 der Schaumstoffauflage.5 getrennt sein, so daß durch diese Randwülste 18 die Einfederung der Polsterungsabschnitte 7 nicht beeinträchtigt wird.

Der gegen den Wirbelsäulenbereich vorgewölbte Abschnitt 15 braucht nicht fester Bestandteil der Polsterung der Rückenlehne 3 zu sein. Es ist durchaus möglich, die Brustkorbabstützung 17 als einen Zusatzpolster 20 auszuführen, der an der Rückenlehne 3 wahlweise befestigt werden kann, wie dies in den Fig. 1 und 2 strichpunktiert angedeutet ist.

Das Ausführungsbeispiel nach der Fig, 4 zeigt einen erfindungsgemäßen Sitz in Form eines Autositzes ohne seine Bodenstützen, Höhen- und Neigungseinstelleinrichtungen, Verankerungen und Sicherheitsgurthalterungen. Zum Unterschied zum Ausführungsbeispiel nach den Fig. 1 bis 3 gehören der vordere und der hintere Bereich 10, 11 der Sitzfläche 2 zwei Sitzflächenteilen 21 und 22 an, wobei der hintere Sitzflächenteil 21 gegenüber dem vorderen um eine Schwenkachse 23 abschwenkbar gelagert ist. Die Rückenlehne 3, die mit einer Kopfstütze 24 versehen ist, besteht aus einer tragenden Schale 25, die im Lendenwirbelbereich eine Auswöbung 26 aufweist. Da die Polsterung 27 der Rückenlehne 3 jedoch diese Auswölbung 26 der Schale 25 nicht mitmacht, wird bei einer entsprechenden Andrückkraft des Körpers eines Beützers an die Rückenlehne 3 eine kyphotische Wölbung der Lendenwirbelsäule erzwungen, insbesondere bei einem gleichzeitigen Abschwenken des hinteren Bereiches 10 der Sitzfläche 2. Die Brustkorbabstützung 17 der Rückenlehne 3 ist als härterer Einsatz der Polsterung dargestellt, die durch die weicheren seitlich an die mittlere Brustkorbabstützung anschließenden Polsterungsabschnitte die Beweglichkeit des Brustkorbes im Rippen- und Schulterblattbereich sicherstellt. Die Kopfstütze 24 ist mit Hilfe von bleibend verformbaren oder sich nur langsam rückstellenden Dämpferelementen 28 befestigt.

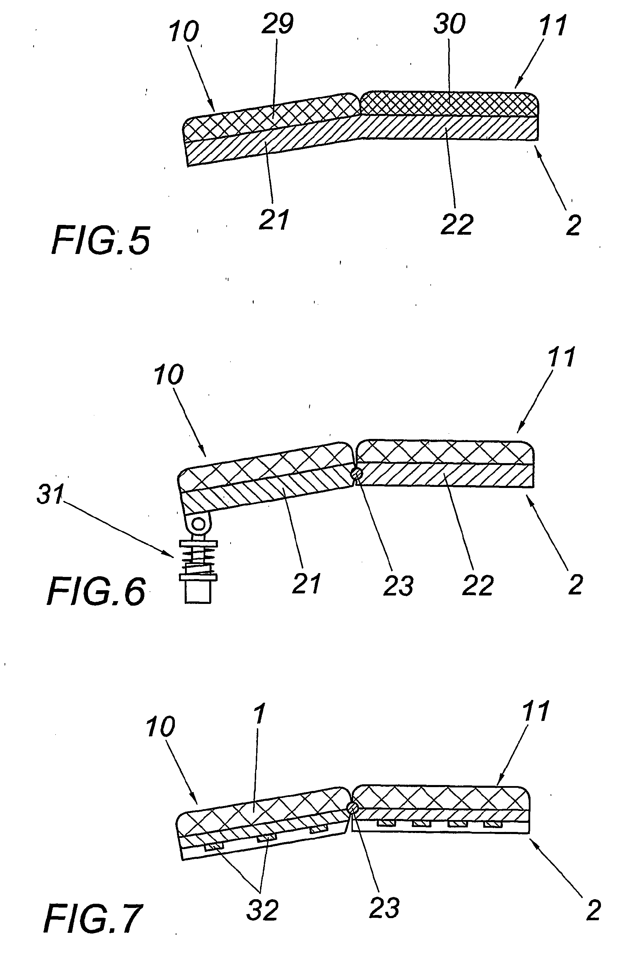

Die Fig. 5 zeigt, daß ein Abschwenken des hinteren Sitzflächenteiles 21 bzw. eine vertiefte Aufsitzlage im hinteren Bereich 10 der Sitzfläche 2 durch eine weichere Polsterung 29 im hinteren Bereich 10 und eine härtere Polsterung 30 im vorderen, eine Beinauflage bildenden Bereich 11 der Sitzfläche 2 erzwungen werden kann. Nach der Fig. 6 wird zu diesem Zweck der mit dem Sitzflächenvorderteil 22 gelenkig verbundene Sitzflächenhinterteil 21 über ein Dämpferelement 31 bzw. mehrere solcher Dämpferlemente abgestützt. Diese Dämpferelemente 31 sind beim Ausführungsbeispiel als Feder-Stoßdämpferelemente veranschaulicht. Schließlich zeigt die Fig. 7 die Möglichkeit, die Sitzflächenteile 21 und 22 auf einem Lattenrost 32 als Dämpfungselement abzustützen, wobei der Lattenrost 32 im Bereich des hinteren Sitzflächenteiles 21 durch größere Abstände oder größere Biegsamkeit der Latten weicher als im Bereich des vorderen Sitzflächenteiles 22 eingestellt ist.

Die Erfindung ist selbstverständlich nicht auf die dargestellten Ausführungsbeispiele beschränkt und kann nicht nur bei Fahrzeugsitzen, sondern auch bei Bürosesseln oder anderen Sitzen vorteilhaft angewandt werden, wenn es gilt, dem Körper eine ausreichende Bewegungsfreiheit insbesondere im Bereich des Oberkörpers zu bieten.

## Patentansprüche

1. Sitz, insbesondere für ein Fahrzeug, mit einer gepolsterten Sitzfläche (2) und einer gepolsterten Rückenlehne (3), **dadurch gekennzeichnet, daß** die Rükkenlehne (3) eine auf einen mittleren Bereich zu beiden Seiten der Wirbelsäule eines Benützers beschränkte Brustkorbabstützung (17) bildet, an die sich gegenüber dem Brustkorb (6) zurückversetzte und/oder federnd nachgiebige Polsterungsabschnitte seitlich anschließen.
wobei die Rückenlehne im Anlagebereich des Brustkorbes einen Querschnitt mit einer im wesentlichen geraden oder gegen den Wirbelsäülenbereich, vorgewölbten vorderen Begrenzung aufweist, wodurch sich mit zunehmendem Seitenabstand, von dieser Brustkorbabstützung eine zunehmende Freistellung des Brustkorbes ergibt.

2. Sitz nach Anspruch 1, **dadurch gekennzeichnet, daß** die Rückenlehne (3) im Bereich (8, 9) sowohl der Brustkorbabstützung (17) als auch der Lendenwirbelsäule der Höhe nach in je für sich federnd nachgiebige Polsterungsabschnitte (7) unterteilt ist.

3. Sitz nach einem der Ansprüche 1 bis 2, **dadurch gekennzeichnet, daß** die Sitzfläche (2) in einem an die Rückenlehne (3) anschließenden hinteren und einem eine Beinauflage bildenden vorderen Bereich (10, 11) eine in Richtung der Sitztiefe unterteilte Polsterung mit je für sich federnd nachgiebigen Polsterungsabschnitten (7) aufweist.

4. Sitz nach Anspruch 3, **dadurch gekennzeichnet, daß** der hintere Bereich (10) der Sitzfläche (2) gegenüber dem vorderen, eine Beinauflage bildenden Bereich (11) nach hinten abschwenkbar ist.

5. Sitz nach Anspruch 3, **dadurch gekennzeichnet, daß** der hintere Bereich (10) der Sitzfläche (2) gegen Dämpferelemente (31) abschwenkbar ist.

6. Sitz nach einem der Ansprüche 3 bis 5, **dadurch gekennzeichnet, daß** die Polsterung (29) des hinteren Bereiches (10) der Sitzfläche (2) weicher als die Polsterung (30) des vorderen Bereiches (11) ist.

7. Sitz nach einem der Ansprüche 1 bis 6, **dadurch gekennzeichnet, daß** die Rückenlehne (3) eine die Kyphose der Lendenwirbelsäule des Benützers zumindest ab einer vorgegebenen Belastungsschwelle begünstigende Form aufweist.

8. Sitz nach einem der Ansprüche 1 bis 7, **dadurch gekennzeichnet, daß** die aus einer Schaumstoffauflage (5) bestehende Polsterung durch quer zur Rückenlehne (3) bzw. quer zur Sitztiefe verlaufende Einschnitte (6) der Schaumstoffauflage (5) in je für sich federnd nachgiebige Polsterungsabschnitte (7) unterteilt ist.

9. Sitz nach Anspruch 8, **dadurch gekennzeichnet, daß** die Einschnitte (6) in der Schaumstoffauflage (5) für die Rückenlehne (3) im Bereich der Brustkorbabstützung (17) vom Einschnittgrund (12) schräg nach oben und im Bereich (9) der Lendenwirbelsäule vom Einschnittgrund (12) schräg nach unten verlaufen.

10. Sitz nach Anspruch 8 oder 9, **dadurch gekennzeichnet, daß** die Einschnitte (6) in der Schaumstoffauflage (5) für die Sitzfläche (2) im hinteren Bereich (10) vom Einschnittgrund (12) schräg nach hinten und im vorderen Bereich (11) der Beinauflage schräg nach vorne verlaufen.

11. Sitz nach einem der Ansprüche 8 bis 10, **dadurch gekennzeichnet, daß** im Bereich der Einschnitte (6) zwischen den einzelnen Polsterungsabschnitten (7) Stoßfugen frei bleiben.

12. Sitz nach einem der Ansprüche 1 bis 11, **dadurch gekennzeichnet, daß** die Brustkorbabstützung (17) der Rückenlehne (3) aus einem wahlweise an der Rückenlehne (3) befestigbaren Zusatzpolster (20) besteht.

## Claims

1. Seat, in particular for a vehicle, having a padded seat surface (2) and a padded back-rest (3), **characterised in that** the back-rest (3) forms a ribcage support (17) narrowed in a central region on both sides of the spine of a user, padded sections laterally adjoining the ribcage support and being resiliently compliant and/or offset backwards with respect to the ribcage (6),
wherein the back-rest has in the region of contact with the ribcage a cross-section having a front boundary which is substantially straight or bulges out with respect to the spinal region, whereby the ribcage becomes increasingly clear of this ribcage support as the lateral distance increases.

2. Seat as claimed in Claim 1, **characterised in that** the back-rest (3) is divided into independently resiliently compliant padded sections (7) depending upon the height in the region (8, 9) of the ribcage support (17) and also of the lumbar spine.

3. Seat as claimed in any one of Claims 1 to 2, **characterised in that** the seat surface (2) comprises, in a rear region (10) adjoining the back-rest (3) and a front region (11) forming a leg support, padding divided in the direction of the seat depth having independently resiliently compliant padded sections (7).

4. Seat as claimed in Claim 3, **characterised in that** the rear region (10) of the seat surface (2) can be swivelled backwards with respect to the front region (11) forming a leg support.

5. Seat as claimed in Claim 3, **characterised in that** the rear region (10) of the seat surface (2) can be swivelled with respect to shock-absorbing elements (31).

6. Seat as claimed in any one of Claims 3 to 5, **characterised in that** the padding (29) of the rear region (10) of the seat surface (2) is softer than the padding (30) of the front region (11).

7. Seat as claimed in any one of Claims 1 to 6, **characterised in that** the back-rest (3) has a shape which is favourable in terms of the kyphosis of the lumbar spine of the user at least from a predetermined load threshold.

8. Seat as claimed in any one of Claims 1 to 7, **characterised in that** the padding g consisting of a foam support (5) is divided into independently resiliently compliant padding sections (7) by way of notches (6) in the foam support (5) extending transversely with respect to the back-rest (5) or transversely with respect to the seat depth.

9. Seat as claimed in Claim 8, **characterised in that** the notches (6) in the foam support (5) for the back-rest (3) extend in an inclined manner upwards from the notch root (12) in the region of the ribcage support (17) and extend in an inclined manner downwards from the notch root (12) in the region (9) of the lumbar spine.

10. Seat as claimed in Claim 8 or 9, **characterised in that** the notches (6) in the foam support (5) for the seat surface (2) extend in an inclined manner rearwardly from the notch root (12) in the rear region (10) and extend in an inclined manner forwardly in the front region (11) of the leg support.

11. Seat as claimed in any one of Claims 8 to 10, **characterised in that** joint gaps remain exposed in the region of the notches (6) between the individual padded sections (7).

12. Seat as claimed in any one of Claims 1 to 11, **characterised in that** the ribcage support (17) of the back-rest (3) consists of additional padding (20) which can be selectively attached to the back-rest (3).

## Revendications

1. Siège, en particulier pour véhicule, avec une surface d'assise (2) rembourrée et un dossier (3) rembourré, **caractérisé en ce que** le dossier (3) forme un soutien de cage thoracique (17), limité à une zone centrale, des deux côtés de la colonne vertébrale d'un utilisateur, soutien auquel se raccordent des tronçons de rembourrage, rétractés par rapport à la cage thoracique (6) et/ou déformables élastiquement,
le dossier présentant, dans la zone d'appui de la cage thoracique, une section transversale avec une délimitation avant sensiblement rectiligne ou bombée vers l'avant, vers la zone de colonne vertébrale, faisant que, lorsque l'espacement latéral vis-à-vis de ce soutien de cage thoracique augmente, on obtient une libération de plus en plus grande de la cage thoracique.

2. Siège selon la revendication 1, **caractérisé en ce que**, dans la zone (8, 9), tant du soutien de cage thoracique (17) qu'également de la colonne vertébrale, le dossier (3) est divisé en hauteur, en tronçons de rembourrage (7) déformables élastiquement chacun pour soi.

3. Siège selon l'une des revendications 1 à 2, **caractérisé en ce que**, dans une zone arrière (10), se raccordant au dossier (3), et une zone avant (11), formant un reposoir pour les jambes, la surface d'assise (2) présente un rembourrage subdivisé en direction de la profondeur de siège, avec respectivement des tronçons de rembourrage (7) déformables élastiquement chacun pour soi.

4. Siège selon la revendication 3, **caractérisé en ce que** la zone arrière (10) de la surface d'assise (2) est abaissable par pivotement vers l'arrière, par rapport à la zone avant (11) formant un reposoir pour les jambes.

5. Siège selon la revendication 3, **caractérisé en ce que** la zone arrière (10) de la surface d'assise (2) est abaissable par pivotement, contre des éléments amortisseurs (31).

6. Siège selon l'une des revendications 3 à 5, **caractérisé en ce que** le rembourrage (29) de la zone arrière (10) de la surface d'assise (2) est plus souple que le rembourrage (30) de la zone avant (11).

7. Siège selon l'une des revendications 1 à 6, **caractérisé en ce que** le dossier (3) présente une forme favorisant la cyphose de la colonne vertébrale lombaire de l'utilisateur, au moines à partir d'un seuil de sollicitation prédétermine .

8. Siège selon l'une des revendications 1 à 7, **caractérisé en ce que** le rembourrage, composé d'une couche de matériau alvéolaire (5), est subdivisé en tronçons de rembourrage (7) déformables élastiquement chacun pour soi, au moyen d'entailles (6), s'étendant transversalement au dossier (3) ou transversalement à la profondeur d'assise, de la couche de matériau alvéolaire (5).

9. Siège selon la revendication 8, **caractérisé en ce que** les entailles (6) ménagées dans la couche de matériau alvéolaire (5), pour le dossier (3), s'étendent, en partant du fond d'entaille (12), obliquement vers le haut dans la zone du soutien de cage thoracique (17), et, en partant du fond d'entaille (12), obliquement vers le bas dans la zone (9) de à colonne vertébrale lombaire.

10. Siège selon la revendication 8 ou 9, **caractérisé en ce que** les entailles (6) ménagées dans la couche de matériau alvéolaire (5), pour la surface d'assise (2), s'étendent, en partant du fond d'entaille (12), obliquement vers l'arrière dans la zone arrière (10) et, obliquement vers l'avant dans la zone avant (11) du reposoir pour les jambes.

11. Siège selon l'une des revendications 8 à 10, **caractérisé en ce que** des joints restent libres entre les différents tronçons de rembourrage (7), dans la zone des entailles (6).

12. Siège selon l'une des revendications 1 à 11, **caractérisé en ce que** le soutien de cage thoracique (17) du dossier (3) est composé d'un rembourrage additionnel (20), susceptible d'être fixé, au choix, sur le dossier (3).
